# EUROPÄISCHE PATENTSCHRIFT

(11) **EP 3 389 893 B1**
(45) Veröffentlichungstag und Bekanntmachung des Hinweises auf die Patenterteilung: **02.09.2020**
(21) Anmeldenummer: 16805372.6
(22) Anmeldetag: 30.11.2016
(51) Int. Cl.: B22C 1/16, B22C 9/02, B33Y 80/00, B33Y 10/00

(54) **VERFAHREN ZUR HERSTELLUNG EINER GIESSEREISANDFORM, INSBESONDERE EINES GIESSEREISANDKERNS, UNTER EINSCHLUSS EINES DREIDIMENSIONALEN DRUCKVERFAHRENS**
METHOD FOR PRODUCING A FOUNDRY SAND MOLD, IN PARTICULAR A FOUNDRY SAND CORE, INCLUDING A THREE-DIMENSIONAL PRINTING METHOD
PROCÉDÉ DE FABRICATION D'UN MOULE EN SABLE POUR FONDERIE, NOTAMMENT D'UN NOYAU EN SABLE POUR FONDERIE, AVEC INCLUSION D'UN PROCÉDÉ DE COMPRESSION TRIDIMENSIONNEL

(30) Priorität: 15.12.2015 DE 102015225230
(43) Veröffentlichungstag der Anmeldung: 24.10.2018
(73) Patentinhaber: Robert Bosch GmbH, 70442 Stuttgart (DE)
(72) Erfinder: SPIESS, Olivier, 63879 Weibersbrunn (DE); ENDRICH, Daniel, 97209 Veitshoechheim (DE)
(86) Internationale Anmeldenummer: PCT/EP2016/079171
(87) Internationale Veröffentlichungsnummer: WO 2017/102317

(56) Entgegenhaltungen:
- EP-A1- 2 193 858
- DE-A1-102009 024 013
- BRÜCK S ET AL: "RF-Aerogels: A New Binding Material for Foundry Application", JOURNAL OF SOL-GEL SCIENCE AND TECHNOLOGY, SPRINGER, NEW YORK, NY, US, Bd. 26, 1. Januar 2003 (2003-01-01), Seiten 663-666, XP002442103, ISSN: 0928-0707, DOI: 10.1023/A:1020709129165
- "Innovativer 3-D-Druck in Giessereien", GIESSEREI,, Bd. 101, Nr. 10, 7. Oktober 2014 (2014-10-07), Seiten 74-77, XP001596227, in der Anmeldung erwähnt

## Beschreibung

Die Erfindung betrifft ein Verfahren zur Herstellung eines Gießereisandkerns unter Einschluss eines dreidimensionalen Druckverfahrens, kurz Sanddruck.

Aus dem Artikel "Innovativer 3-D-Druck in Gießereien" der Zeitschrift Giesserei, Ausgabe 10/2014, Seiten 74 bis 77 ist es bekannt, zum Abguss von Metallteilen, insbesondere Eisenteilen, Formen und Kerne aus im wesentlichen Sand zu verwenden, die durch ein dreidimensionales Druckverfahren gefertigt worden sind. Beim Einsatz eines derartigen Druckverfahrens werden Formen und Kerne ohne Werkzeuge nur anhand eines Datensatzes hergestellt. Gedruckt wird dabei in Schichten, deren dicke nur den Bruchteil eines Millimeters beträgt, wobei zunächst eine Schüttschicht aus einem Sandgemisch, das Formsand und einen Aktivator enthält, gebildet wird, in die der Druckkopf der zur Durchführung des Druckverfahrens benutzten Vorrichtung an den für die Geometrie der Form oder des Kerns relevanten Bereichen ein Bindemittel einbringt. Je nach Art des verwendeten Bindemittels wird das Druckverfahren zum Beispiel als Phenolharzverfahren oder Furanharzverfahren bezeichnet. Die Erfindung bezieht sich insbesondere auf ein Furanharzverfahren.

Der Erfindung liegt die Aufgabe zugrunde, ein Verfahren zur Herstellung eines Gießereisandkerns unter Einschluss eines dreidimensionalen Druckverfahrens zu schaffen, bei deren Anwendung und Verwendung der Gießprozess und die Ergebnisse des Gießprozesses verbessert sind.

Diese Aufgabe wird durch ein Verfahren gemäß Patentanspruch 1 gelöst, das bei der Herstellung eines Gießereisandkerns unter Einschluss eines dreidimensionalen Druckverfahrens verwendet wird.

Gemäß der Erfindung wird also bei dem dreidimensionalen Drucken einer Gießereisandform, insbesondere eines Gießereisandkerns, ein Sandgemisch verwendet, das den Formsand und den Aktivator, der für die Härtung des Bindemittels vorhanden ist, und als Additiv ein Aerogel enthält. Die Zugabe des Aerogels beim Sanddruck wirkt sich in mannigfacher Hinsicht vorteilhaft auf die Arbeitsverfahren in einer Gießerei und auf die Gusserzeugnisse aus. Die Festigkeit der Formen und Kerne wird gesteigert. Es ist ein schlichtefreies beziehungsweise schlichtereduziertes Gießen möglich. Die Emissionen beim Abguss werden gesenkt. Die Gussteile können leichter entkernt werden. Gussfehler werden reduziert. Graphitentartungen beim Kugelgraphit werden reduziert.

Aerogele, die es als hydrophile und als hydrophobe Aerogele gibt, sind hochporöse Festkörper, die in ihrem Volumen zu über 95 Prozent aus Poren bestehen. Aerogele können wegen ihrer hohen Porosität in hohem Maße Gase adsorbieren. Durch das in der Sandmischung enthaltene Aerogel werden also beim Abguss entstehende Gießgase adsorbiert. Dadurch kann der Anteil der Gase, der in die Umwelt abgegeben wird, beziehungsweise der bisher betriebene Aufwand für Absaugung und Gasreinigung, durch den eine Abgabe der Gase in die Umwelt verhindert werden soll, reduziert werden. die Umweltbelastung kann also reduziert werden. Emissionsobergrenzen lassen sich leichter einhalten.

Das Aerogel wird vorzugsweise als Granulat beziehungsweise Pulver mit dem Formsand beziehungsweise Kernsand vermischt. Dem Gemisch kann schon der Aktivator oder der das Bindemittel zugesetzt sein. Bei der eigentlichen Herstellung der Form oder des Kerns durch Sanddruck werden aus der Formsand, Aktivator beziehungsweise Bindemittel und Aerogel enthaltenden Sandmischung Schichten gebildet, auf die in den geometrierelevanten Bereichen Bindemittel beziehungsweise Aktivator aufgetragen wird.

Der Einsatz von Aerogelen in der Sandmischung führt auch zu einer Reduzierung des Reinigungsaufwandes und der Nachbearbeitung an den Gussteilen nach dem Abguss. Der Zusatz von Aerogelgranulat erleichtert wegen der zerfallsfördernden Eigenschaften von Aerogelen die Trennung beziehungsweise die Zerkleinerung der Kerne. Diese zerfallen nach dem Abguss und müssen nicht aufwendig mechanisch zerschlagen werden.

Es ist vorteilhaft, wenn die Partikelgröße des Aerogels ähnlich der Korngröße des Formsandes gewählt ist. Die Korngröße des Formsandes ist üblicherweise kleiner als 0,4mm.

Vorzugsweise beträgt die zugegebene Menge an Aerogel 0,5 Volumenprozent bis 8 Volumenprozent der Sandmischung, also der Mischung, aus der jeweils eine neue Schicht auf der unvollendeten Form oder dem unvollendeten Kern gebildet wird und auf die dann das Bindemittel aufgetragen wird.

Die Porengröße des Aerogels ist vorzugsweise so ausgebildet ist, dass magnesiumreagierende Elemente oder magnesiumreagierende Verbindungen wie Schwefelverbindungen und Sauerstoffverbindungen von dem Aerogel adsorbiert werden können. Das führt zu einem verringerten Magnesiumverbrauch an der Oberfläche der Form oder des Kerns, so dass beim Sphäroguss Graphitentartungen reduziert sind.

Als Additiv kommen insbesondere Kohlenstoff-Aerogele, Resorcin-Formaldehyd-Aerogele, Silica-Aerogele oder Siliziumoxidcarbid-Aerogele oder Zirkonoxid-Aerogele oder Kombinationen dieser Arten von Aerogelen in Betracht.

Besonders vorteilhaft ist die Verwendung eines Aerogels, wenn das Bindemittel auf Furanharz basiert, wenn also das Sanddruckverfahren ein Furanharzverfahren ist. Die Verwendung eines Bindemittels auf einer Furanharzbasis ermöglicht einen schnellen Druck und eine direkte Verwednung der Form nach dem Drucken.

Eine Sandmischung zur Verwendung bei der Herstellung eines Gießereisandkerns unter Einschluss eines dreidimensionalen Druckverfahrens zeichnet sich dadurch aus, das sie einen Formsand, ein Bindemittel und ein Aerogel enthält.

Bevorzugt ist bei der Sandmischung die Partikelgröße des Aerogels ähnlich der Korngröße des Formsandes. Die Korngröße des Formsandes ist üblicherweise kleiner als 0,4mm.

Vorzugsweise setzt sich die Sandmischung so aus den verschiedenen Bestandteilen zusammen, dass die zugegebene Menge an Aerogel 0,5Vol.-% bis 8 Volumenprozent der Sandmischung beträgt, also der Mischung, aus der jeweils eine neue Schicht auf der unvollendeten Form oder dem unvollendeten Kern gebildet wird und auf die dann das Bindemittel aufgetragen wird.

Die Porengröße des in der Sandmischung verwendeten Aerogels ist vorzugsweise so ausgebildet ist, dass magnesiumbindende Elemente oder magnesiumreagiernde Verbindungen wie Schwefelverbindungen und Sauerstoffverbindungen von dem Aerogel adsorbiert werden können. Das führt zu einem verringerten Magnesiumverbrauch an der Oberfläche der Form oder des Kerns, so dass beim Sphäroguss Graphitentartungen reduziert sind.

Als Additiv des Sandgemisches kommen insbesondere Kohlenstoff-Aerogele, Resorcin-Formaldehyd-Aerogele, Silica-Aerogele oder Siliziumoxidcarbid-Aerogele oder Zirkonoxid-Aerogele oder Kombinationen dieser Arten von Aerogelen in Betracht.

## Patentansprüche

1. Verfahren zur Herstellung einer Gießereisandgussform, insbesondere eines Gießereisandkerns, unter Einschluss eines dreidimensionalen Druckverfahrens, wobei ein Formsand, ein Bindemittel und ein Aktivator verwendet, **dadurch gekennzeichnet, dass** als Additiv ein Aerogel zugegeben wird.

2. Verfahren nach Patentanspruch 1, wobei das Aerogel als Granulat beziehungsweise Pulver mit dem Formsand vermischt wird.

3. Verfahren nach Patentanspruch 2, wobei aus der Formsand und Aerogel enthaltenden Sandmischung Schichten gebildet werden, auf die in den geometrierelevanten Bereichen Bindemittel beziehungsweise Aktivator aufgetragen wird.

4. Verfahren nach Patentanspruch 2 oder 3, wobei die Partikelgröße des Aerogels ähnlich der Korngröße des Formsandes gewählt ist.

5. Verfahren nach Patentanspruch 4, wobei die Partikelgröße des Aerogels und die Korngröße des Formsandes kleiner als 0,4mm sind.

6. Verfahren nach einem der Patentansprüche 3 bis 5, wobei die zugegebene Menge an Aerogel 0,5Vol.-% bis 8 Vol.-% der Sandmischung beträgt.

7. Verfahren nach einem vorhergehenden Patentanspruch, wobei als Aerogel ein Kohlenstoff-Aerogel verwendet wird.

8. Verfahren nach einem vorhergehenden Patentanspruch, wobei als Aerogel ein Resorcin-Formaldehyd-Aerogel verwendet wird.

9. Verfahren nach einem vorhergehenden Patentanspruch, wobei als Aerogel ein Silica-Aerogel verwendet wird.

10. Verfahren nach einem vorhergehenden Patentanspruch, wobei als Aerogel ein Siliziumoxidcarbid-Aerogel oder ein Zirkonoxid-Aerogel verwendet wird.

11. Verfahren nach einem vorhergehenden Patentanspruch, wobei das Bindemittel auf Furanharz basiert.

## Claims

1. Method for producing a foundry sand casting mould, in particular a foundry sand core, with inclusion of a three-dimensional printing process, where a mould sand, a binder and an activator are used, **characterized in that** an aerogel is added as additive.

2. Method according to Claim 1, wherein the aerogel is mixed as granular material or powder with the mould sand.

3. Method according to Claim 2, wherein layers are formed from the sand mixture containing mould sand and aerogel and binder or activator is applied to these layers in the geometrically relevant regions.

4. Method according to Claim 2 or 3, wherein the particle size of the aerogel is selected so as to be similar to the particle size of the mould sand.

5. Method according to Claim 4, wherein the particle size of the aerogel and the particle size of the mould sand are less than 0.4 mm.

6. Method according to any of Claims 3 to 5, wherein the amount of aerogel added makes up from 0.5% by volume to 8% by volume of the sand mixture.

7. Method according to any of the preceding claims, wherein a carbon aerogel is used as aerogel.

8. Method according to any of the preceding claims, wherein a resorcinol-formaldehyde aerogel is used as aerogel.

9. Method according to any of the preceding claims, wherein a silica aerogel is used as aerogel.

10. Method according to any of the preceding claims, wherein a silicon oxide carbide aerogel or a zirconium oxide aerogel is used as aerogel.

11. Method according to any of the preceding claims, wherein the binder is based on furan resin.

## Revendications

1. Procédé de fabrication d'un moule en sable de fonderie, notamment d'un noyau en sable de fonderie, avec inclusion d'un procédé d'impression tridimensionnel, dans lequel un sable de moulage, un liant et un activateur sont utilisés, **caractérisé en ce qu'**un aérogel est ajouté en tant qu'additif.

2. Procédé selon la revendication 1, dans lequel l'aérogel est mélangé avec le sable de moulage sous la forme d'un granulat ou d'une poudre.

3. Procédé selon la revendication 2, dans lequel des couches sont formées à partir du mélange de sable contenant le sable de moulage et l'aérogel, sur lesquelles un liant ou un activateur est appliqué dans les zones géométriquement pertinentes.

4. Procédé selon la revendication 2 ou 3, dans lequel la taille de particule de l'aérogel est choisie semblable à la taille de grain du sable de moulage.

5. Procédé selon la revendication 4, dans lequel la taille de particule de l'aérogel et la taille de grain du sable de moulage sont inférieures à 0,4 mm.

6. Procédé selon l'une quelconque des revendications 3 à 5, dans lequel la quantité d'aérogel ajoutée est de 0,5 % en volume à 8 % en volume du mélange de sable.

7. Procédé selon l'une quelconque des revendications précédentes, dans lequel un aérogel de carbone est utilisé en tant qu'aérogel.

8. Procédé selon l'une quelconque des revendications précédentes, dans lequel un aérogel de résorcine-formaldéhyde est utilisé en tant qu'aérogel.

9. Procédé selon l'une quelconque des revendications précédentes, dans lequel un aérogel de silice est utilisé en tant qu'aérogel.

10. Procédé selon l'une quelconque des revendications précédentes, dans lequel un aérogel d'oxycarbure de silicium ou un aérogel d'oxyde de zirconium est utilisé en tant qu'aérogel.

11. Procédé selon l'une quelconque des revendications précédentes, dans lequel le liant est à base d'une résine de furane.
